# EUROPÄISCHE PATENTSCHRIFT

(11) **EP 0 790 456 B1**
(45) Veröffentlichungstag und Bekanntmachung des Hinweises auf die Patenterteilung: **16.06.1999**
(21) Anmeldenummer: 97102273.6
(22) Anmeldetag: 13.02.1997
(51) Int. Cl.: F16L 21/08, F16L 37/084

(54) **Schubgesicherte Steckverbindung für Muffenrohre**
Locked socket coupling device
Raccord à douille verrouillée pour tuyaux à manchon

(30) Priorität: 17.02.1996 DE 19605993
(43) Veröffentlichungstag der Anmeldung: 20.08.1997
(73) Patentinhaber: THYSSEN INDUSTRIE AG, 45128 Essen (DE)
(72) Erfinder: Rammelsberg, Jürgen, Dr., 44652 Herne (DE); Brune, Peter, 45277 Essen (DE)
(74) Vertreter: Dahlkamp, Heinrich-Leo, Dipl.-Ing.

(56) Entgegenhaltungen:
- EP-A- 0 596 394
- DE-A- 4 324 093
- NL-B- 170 325
- US-A- 5 067 751

## Beschreibung

Die Erfindung betrifft eine Verriegelungseinrichtung für eine schubgesicherte Steckverbindung von Rohren gemäß Oberbegriff des Anspruches 1.

Zur Aufnahme von Längskräften müssen Rohre, die über eine Steckmuffenverbindung zusammengefügt werden, über eine besondere Verriegelungseinrichtung verfügen. Das Muffenende der Rohre besitzt üblicherweise neben dem Profil, das die Dichtung aufnimmt, eine nach außen hin vorgelagerte, im wesentlichen kegelförmige, Kammer. Das Einsteckende komprimiert beim Einschieben in die Muffe die Dichtung. Werden Längskräfte in Folge von Richtungs- oder Querschnittsänderungen an der Muffenverbindung wirksam, so sind die Verbindungen gegen Auseinanderziehen zu verriegeln.

Eine bekannte Ausführung dieser Verriegelungskonstruktionen (EP 0141276 A1) benötigt auf dem Einsteckende einen Wulst, über den die Längskräfte mittels Verriegelungssegmenten in die Muffenkammer übertragen werden. Ein Nachteil dieser Verbindung ist die Herstellung eines solchen Wulstes bei Rohren, die auf der Baustelle geschnitten werden müssen.

Bekannt ist auch die Ausführung (DE 4134089 A1), bei der mit Zähnen versehene Verriegelungssegmente miteinander zu einem flexiblen Band verbunden sind, an das ein ringförmiges Halteteil angeformt ist, welches an oder über der Stirnseite des Muffenendes festgelegt wird. Damit werden die Verriegelungselemente während des Einschubvorganges am Muffenende fixiert. Bei größeren Muffendurchmessern muß der elastische Ring mit seinen eingebetteten Metallzargen durch zusätzliche Maßnahmen gesichert werden, z.B. durch einen im Halteteil vor der Muffe einvulkanisierten Stahlring. Dieser stabilisierende Stahlring erschwert die Montage des Verriegelungskranzes infolge seiner Ringsteifigkeit.

Bei einer weiteren Ausführung (US 52 69 569 und US 51 97 768) werden die gezahnten Rückhalteelemente ebenfalls in einen Gummiring einvulkanisiert. Dabei liegen die Zahnspitzen parallel zur Rohrachse, wobei vor der Montage die lichte Weite zwischen den Zahnspitzen kleiner als der Außendurchmesser des einzuschiebenden Rohres ist. Beim Einschieben des Rohreinsteckendes gleiten die Zahnsegmente entlang der Kegelmantelfläche nach außen, sodass sich die lichte Weite zwischen den Zahnspitzen vergrößert, bis das Einsteckende passieren kann. Eine umlaufende elastische Lippe zwischen den Rückhalteelementen und der rückwärtigen Wand der Schubsicherungskammer wird dabei axial komprimiert und sorgt so für die Radialkräfte, welche die Zähne in die Oberfläche des Einsteckendes eintreiben. Diese Anordnung findet ihre Anwendungsgrenze bei größeren Rohrnennweiten, wo die Toleranzfelder der Steckmuffenverbindungen so breit werden, dass entweder eine sichere Verriegelung bei Maximal-Spalten (größtmögliche Muffen-Innenmaße und kleinstmögliche Einsteckendendurchmesser) oder die Montierbarkeit bei Minimal-Spalten (kleinstmögliche Muffeninnenmaße und größtmögliche Einsteckendendurchmesser) nicht mehr möglich ist.

Aus der US-A-5 067 751 und der EP 0 596 394 B1 sind gattungsgemäße Verriegelungseinrichtungen bekannt, bei denen ebenfalls die Verriegelungselemente von einem flexiblen Ring gehalten werden. Bei den aus diesem Stand der Technik bekannten Einrichtungen besteht allerdings das Problem, dass der flexible Ring beim Einführen des Einsteckendes aus der Muffenkammer herausgedrückt wird und dadurch eine genaue Positionierung der Verriegelungselemente erschwert wird und es nicht zu der gewünschten Anpressung der Zähne auf die Außenoberfläche des Einsteckendes kommt.

Bei einer weiteren Ausführung (G 9419400.9) wird ein mit Verriegelungszähnen versehenes elastisches Band nach der Herstellung der Rohrverbindung durch Einziehen des Verriegelungsbandes über Öffnungen in der Muffenstirn bewerkstelligt. Die erforderlichen Spannkräfte, mit denen die beiden Enden des Verriegelungsbandes zusammengezogen werden müssen, um ein Eingreifen der Zähne in die Rohroberfläche unter allen Umständen sicherzustellen, sind nur mit besonderen Hilfsmitteln aufzubringen, was auf der Baustelle häufig zu Problemen führt.

Aus der DE 4324093 A1 ist schließlich bekannt, dass die Verriegelungselemente mit aus dem Muffenende herausragenden elastischen Bändern verbunden sind, die außerhalb der Steckverbindung über nachträglich anzubringende Spannbänder auf dem Einsteckende gehalten werden.

Der Erfindung liegt die Aufgabe zugrunde, eine Verriegelungseinrichtung der eingangs beschriebenen Gattung anzugeben, bei der keine Schweißraupe benötigt wird und das nachträgliche Verspannen und Fixieren der Verriegelungslemente auf dem Einsteckende entfallen kann. Weiterhin soll die Verriegelungseinrichtung auch für größere Rohrnennweiten bei einfacher Montage zu sicherer Verriegelung führen, wobei auch keine Probleme beim Einbau des flexiblen Ringes entstehen.

Eine Lösung dieser Aufgabe ist im Patentanspruch 1 angegeben. Der Unteranspruch 2 enthält eine sinnvolle Ausführungsform dazu.

Der mit Zähnen versehene Verriegelungsring besteht aus einzelnen, über dem Umfang gleichmäßig verteilten Zahnsegmenten, die in einen Elastomerring mit verformbaren Anteilen einvulkanisiert sind. Diese lassen die beim Einschubvorgang erforderlichen Verlagerungen der Zahnsegmente zu. Der Ring hat einen Außendurchmesser, welcher größer als der Innendurchmesser der Muffenkammer ist. Durch diese Vergrößerung des Ringdurchmessers gegenüber der aufnehmenden Muffenkammer wird eine Druckspannung in Umfangsrichtung erzeugt, die infolge der dadurch einsetzenden Gewölbewirkung den Ring in seiner Position hält, sodass weitere Fixierungselemente entfallen. Dabei sind die Zahnsegmente in den Elastomerring dergestalt einvulkanisiert, dass die Hüllkurve ihrer Zahnspitzen den Abschnitt eines Hohlkegels bildet. Dieser Hohlkegel ist so dimensioniert, dass der große Innendurchmesser des Kegelabschnittes, am ersten Zahn vom Muffeneingang her gesehen, etwas größer als der Rohraußendurchmesser bei maximalem Abmaß ist (obere Toleranzlage). Der kleine Innendurchmesser des Kegelabschnittes, am letzten Zahn vom Muffeneingang her gesehen, ist geringfügig kleiner als der Außendurchmesser des einzusteckenden Rohres mit dem kleinstmöglichen Abmaß (untere Toleranzlage).

Wird das Rohrende in das mit Dichtung und Schubsicherungsring versehene Muffenprofil eingeschoben, so werden die Zahnelemente zu einer im wesentlichen kippenden Bewegung gezwungen, womit sich der kleine, hintere Durchmesser des Kegelabschnittes am letzten Zahn so lange vergrößert, bis das Rohreinsteckende hindurchgleiten kann. Durch diese Kippbewegung wird das Elastomer zwischen den Zahnelementen und dem hinteren Teil der Verriegelungskammer komprimiert.

Diese Kompression übt auf die Verriegelungselemente eine axiale, muffenauswärtsgerichtete Druckkraft aus, die an der Kegelfläche der Muffeninnenkontur in eine radiale Kraft umgewandelt wird, mit welcher die Zähne in die Rohroberfläche eingetrieben werden. Durch diesen Vorgang ist die Verriegelung des Einsteckendes in der Muffe gegeben.

Im folgenden werden in Zeichnungen dargestellte Ausführungsbeispiele der Erfindung erläutert; es zeigen:
- Fig. 1: teilweise einen Axialschnitt durch eine schubgesicherte Verbindung vor der Montage mit Rohreinsteckenden mit minimalem und maximalem Grenzabmaß
- Fig. 2: einen Schnitt durch die montierte Verbindung mit minimalem Verbindungsspalt
- Fig. 3: einen Schnitt durch die montierte Verbindung mit maximalem Verbindungsspalt.

Zu der in der Zeichnung dargestellten Steckverbindung gehört ein Einsteckende (1) und ein Muffenende (2). Das Einsteckende (1) weist eine glatte Außenoberfläche (3) auf. Das Muffenende (2) weist im hinteren Bereich eine Dichtkammer (4) zur Aufnahme einer nicht gezeichneten Dichtung auf, die bei eingestecktem Einsteckende (1) mit der Außenoberfläche (3) dichtet. Das Muffenende (2) weist außerdem im vorderen Bereich eine größere Muffenkammer (5) auf, die zur Aufnahme von mit Zähnen (10) versehenen Verriegelungselementen bestimmt ist. Die Verriegelungselemente sind in einem Elastomerring (7) einvulkanisiert und stützen sich mit einer Torusabstützfläche (8) an der Konusfläche (9) in der Muffenkammer (5) ab. Die Torusabstützfläche (8) ist dabei so ausgebildet, dass die Normalen der Torusabstützfläche (8) stets den auf der Außenoberfläche (3) des Einsteckendes (1) aufliegenden, verzahnten Abschnitt der Verriegelungselemente (6) schneiden. Damit ist sichergestellt, dass bei allen Toleranzpaarungen und Abwinkelungen von Einsteckende (1) und Muffenende (2) unzulässige Spannungsspitzen vermieden werden.

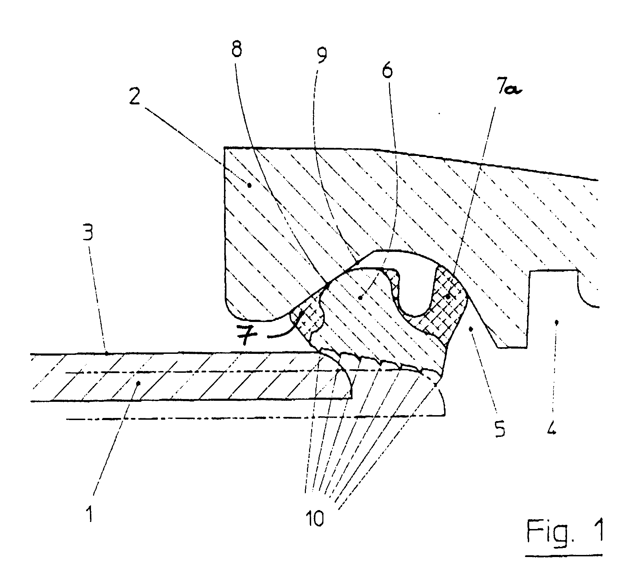

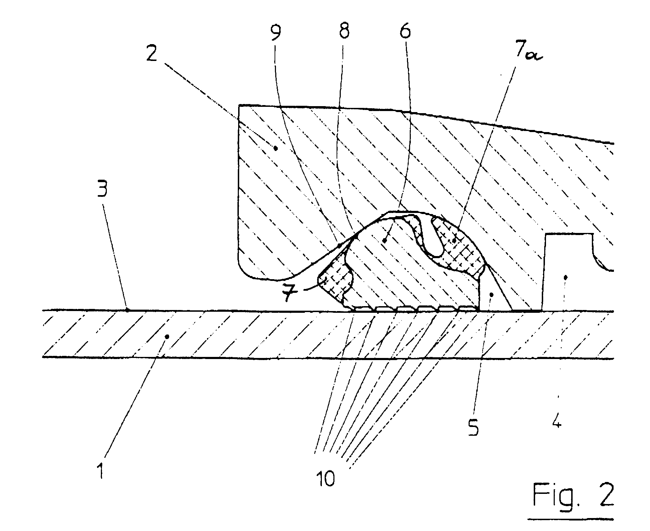

Fig. 2 zeigt im Vergleich zu Fig. 1, dass beim Einschieben eines großen Einsteckendes (enger Spalt) die im elastischen Material des Elastomerringes (7) gelagerten Verriegelungselemente (6) um den Berührungspunkt zwischen ihrer Torusfläche (8) und der Konusfläche (9) gekippt wurden, um das große Einsteckende passieren zu lassen. Diese Kippung hat den rechten Teil des Elastomerrings (7) (Lippe 7a) an der hinteren Wand der Muffenkammer (5) komprimiert; die dabei entstehende axial nach außen gerichtete Druckkraft führt dazu, dass die Verriegelungselemente (6) an ihrem Berührungspunkt eine radial zur Mittellinie des Einsteckendes (1) gerichtete Kraft erfahren, die letztlich zur Verriegelung der Zähne (10) auf der Außenoberfläche (3) führt.

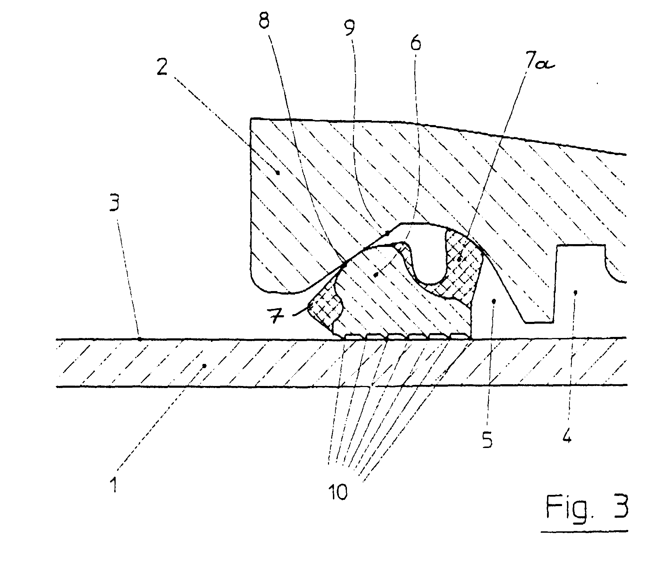

Fig. 3 zeigt die montierte Verbindung mit maximalen Spaltverhältnissen. Der rechte Teil des Elastomerringes (7) (Lippe 7a) ist noch ausreichend verformt, um die für eine sichere Verriegelung der Zähne (10) auf der Außenoberfläche (3) erforderlichen, radial zur Mittellinie des Einsteckendes (1) gerichteten, Kräfte zu erzeugen.

### Bezugszeichenliste:

- 1: Einsteckende
- 2: Muffenende
- 3: Außenoberfläche von 1
- 4: Dichtkammer
- 5: Muffenkammer
- 6: Verriegelungselement
- 7: Elastomerring
- 7a: Lippe
- 8: Torusabstützfläche von 6
- 9: Konusfläche von 2
- 10: Zähne an 6

## Patentansprüche

1. Verriegelungseinrichtung für eine schubgesicherte Steckverbindung mit Rohren, die ein Einsteckende (1) aufweisen, das mit radialem Spiel in das Muffenende (2) eines benachbarten Rohres einschiebbar ist, wobei das Muffenende (2) eine ringförmige Muffenkammer (5) mit einer Abstützfläche (9) für Verriegelungselemente (6) aufweist, die mit Zähnen (10) versehenen Verriegelungselemente (6) miteinander zu einem flexiblen Ring (7) verbunden sind, die Verriegelungselemente (6) im Ring (7) mit Abstand zueinander am Umfang verteilt angeordnet sind, der Ring (7) in der Muffenkammer (5) gehalten wird, bei zusammengefügter Steckverbindung die Zähne (10) radial von außen gegen die Außenoberfläche des Einsteckendes (1) gedrückt werden, der größte Innendurchmesser der Muffenkammer (5) kleiner ist als der Außendurchmesser des Ringes (7) vor dem Einlegen in die Muffenkammer (5), die Zähne (10) der Verriegelungselemente (6) vor dem Einbau auf der Mantelfläche eines Kegelabschnittes liegen, der kleinere Durchmesser des Kegelabschnittes kleiner als der kleinste Durchmesser des Einsteckendes (1) und der größere Durchmesser des Kegelabschnittes größer als der größte Durchmesser des Einsteckendes (1) ist, **dadurch gekennzeichnet,** dass die Verriegelungslemente (6) sich mit einer Torusabstützfläche (8) direkt an einer als Konusfläche ausgebildeten Abstützfläche (9) in der Muffenkammer (5) abstützen, die Verriegelungselemente (6) beim Zusammenfügen der Steckverbindung um den Berührungspunkt an der Konusfläche (9) kippbar sind und das Profil des Ringes (7) eine radial nach außen gerichtete Lippe (7a) besitzt, die sich an einer der Konusfläche (9) gegenüberliegenden Wand in der Muffenkammer (5) abstützt und beim Zusammenfügen der Steckverbindung entgegen der Bewegungsrichtung des Einsteckendes (1) auf dieser Wand rückwärts bewegbar ist.

2. Verriegelungseinrichtung nach einem der Ansprüche 1, **dadurch gekennzeichnet,** dass Teile des flexiblen Ringes (7) infolge ihrer Verformung in der Muffenkammer (5) eine radial zur Rohrachse gerichtete Kraft erzeugen, welche die Zähne (10) sowohl bei größtem als auch bei kleinstem Verbindungsspalt in die Rohroberfläche (3) eintreibt.

## Claims

1. Locking device for a thrust-secured socket coupling with tubes, having an insert end (1) that can be pushed with radial play into the muff end (2) of a neighbouring tube, with the muff end (2) having an annular muff compartment (5) with a supporting surface (9) for locking elements (6) which by way of locking elements (6) provided with teeth (10) are connected to each other to form a flexible ring (7), wherein said locking elements (6) in the ring (7) are distributed at a certain distance to each other at the periphery, with said ring (7) being retained in the muff compartment (5), with said teeth (10) being compressed from outside against the external surface of the insert end (1) if the socket coupling has been assembled, with the greatest inside diameter of the muff compartment (5) being smaller than the outside diameter of said ring (7) prior to insertion into said muff compartment (5), with said teeth (10) of said locking elements (6) being situated on the envelope surface of a cone section prior to installation, with the smaller diameter of the cone section being smaller than the smallest diameter of the insert end (1) and with the greater diameter of the cone section being greater than the greatest diameter of the insert end (1), **characterised in that** the locking elements (6) by way of a torus supporting surface (8) directly rest on a supporting surface shaped like a conus surface (9) situated in the muff compartment (5), and that the locking elements (6) are tiltable around the contact point at the conus surface (9) on assembly of the socket coupling, and that the profile of said ring (7) possesses a lip (7a) radially directed towards the outside, said lip resting at a wall lying opposite to the conus surface (9) in the muff compartment (5) and being movable backwards on this wall during assembly of the socket coupling contrary to the direction of movement of the insert end (1).

2. Locking device pursuant to any one of Claim 1, **characterised in that** parts of the flexible ring (7) generate a force directed radially to the tube axis because of their deformation in the muff compartment (5), said force driving the teeth (10) into the tube surface (3) both in case of the greatest and the smallest connection gap.

## Revendications

1. Dispositif de verrouillage pour un raccord à douille verrouillée avec des tubes présentant un bout mâle (1) qui est introduisible avec un jeu axial dans le manchon d'extrémité (2) d'un tube voisin, le manchon d'extrémité (2) présentant une chambre de manchon annulaire (5) avec une surface d'appui (9) pour des éléments de verrouillage (6), les éléments de verrouillage (6) munis de dents (10) étant reliés entre eux pour former une bague flexible (7), les éléments de verrouillage (6) étant répartis dans la bague (7) sur le pourtour en ayant un écart entre eux, la bague (7) étant maintenue dans la chambre du manchon (5), les dents (10) étant pressées radialement de l'extérieur contre la surface extérieure du bout mâle (1) lorsque le raccord est réalisé, le plus grand diamètre intérieur de la chambre du manchon (5) étant inférieur au diamètre extérieur de la bague (7) avant l'insertion dans la chambre du manchon (5), les dents (10) des éléments de verrouillage (6) reposant avant le montage sur l'aire latérale d'une section conique, le plus petit diamètre de la section conique du bout mâle (1) étant inférieur au plus petit diamètre du bout mâle (1) et le plus grand diamètre de la section conique étant supérieur au plus grand diamètre du bout mâle (1) **caractérisé en ce que** les éléments de verrouillage (6) s'appuient directement avec une surface d'appui torique (8) sur une surface d'appui dans la chambre de manchon (5), ladite surface ayant une forme conique, que les éléments de verrouillage (6) sont basculables autour du point de contact au niveau de la surface conique (9) lorsque le raccord est réalisé et que le profil de la bague (7) possède une lèvre (7a) dirigée radialement vers l'extérieur et s'appuyant sur l'une des parois opposées à la surface de cône (9) dans la chambre du manchon (5) et qu'elle peut être déplacée en arrière sur cette paroi dans le sens de mouvement opposé du bout mâle (1) lors de l'assemblage du raccord.

2. Dispositif de verrouillage selon l'une des revendications 1 **caractérisé en ce que** des parties de la bague flexible (7) génèrent un effort orienté radialement vers l'axe du tube suite à leur déformation dans la chambre du manchon (5), ledit effort enfonçant les dents (10) dans la surface du tube (3) aussi bien avec le plus petit interstice de raccordement qu'avec le plus grand.
